# EUROPÄISCHE PATENTANMELDUNG

(11) **EP 4 345 987 A1**
(43) Veröffentlichungstag der Anmeldung: **03.04.2024**
(21) Anmeldenummer: 23200872.2
(22) Anmeldetag: 29.09.2023
(51) Int. Cl.: H01M 10/613, B60L 50/64, H01M 10/625, H01M 10/6553, H01M 50/249, H01M 50/507

(54) **STROMSCHIENENANORDNUNG UND FAHRZEUGBATTERIE**

(30) Priorität: 30.09.2022 DE 102022125431
(71) Anmelder: Webasto SE, 82131 Stockdorf (DE)
(72) Erfinder: Pradella, Moritz, 82131 Stockdorf (DE); Woköck, Jan, 82131 Stockdorf (DE)
(74) Vertreter: Nordmeyer, Philipp Werner

(57) **Zusammenfassung**

Die vorliegende Erfindung betrifft eine Stromschienenanordnung (1) für eine Fahrzeugbatterie eines Elektrofahrzeugs, umfassend mindestens zwei nebeneinander angeordnete Stromschienen (2) zum elektrischen Kontaktieren zumindest einer elektrischen Komponente der Fahrzeugbatterie, wobei die Stromschienen (2) von einem Kunststoffkörper (4), vorzugweise einem Schaumkörper, umgeben sind, wobei im Kunststoffkörper (4) zumindest ein Befestigungseinsatz (11) zur Befestigung des Kunststoffkörpers (4) an einer Struktur der Fahrzeugbatterie eingebettet ist.

## Beschreibung

### Technisches Gebiet

Die vorliegende Erfindung betrifft eine Stromschienenanordnung zum Einbau in eine Fahrzeugbatterie für ein Elektrofahrzeug und eine Fahrzeugbatterie für ein Elektrofahrzeug.

### Stand der Technik

Im Bereich der Fahrzeugbatterien in Elektrofahrzeugen ist es bekannt, die Batteriezellen und Batteriemodule durch Sammelleiter, welche synonym als Stromschienen bezeichnet werden, elektrisch miteinander zu kontaktieren beziehungsweise zu verschalten. Die Stromschienen können als starre Stromführungen aus gut leitendem Metall, oft Kupfer, genauer aus Metallblechbahnen, beispielsweise aus Kupfer, ausgebildet sein. Da gut leitende Metalle wie Kupfer oder Aluminium vergleichsweise teuer sind, wird versucht, sie sparsam einzusetzen. So gibt es beispielsweise Bestrebungen, den Querschnitt der verwendeten Stromschienen so klein wie möglich zu halten. Ein der Reduzierung des Querschnitts entgegenstehendes Kriterium ist, mehr als die elektrische Tragfähigkeit, die Wärmeentwicklung in den Stromschienen. Denn umso besser die durch Reibung der Elektronen beim Stromfluss entstehende Wärme abgeleitet werden kann, desto kleiner kann der Querschnitt der Stromschiene werden. Und je kühler die Stromschiene, desto geringer der ohmsche Widerstand der Stromschiene, was aus Effizienzgesichtspunkten wichtig ist.

Oftmals wird als Anforderung als Teil des Lastenheftes einer Fahrzeugbatterie ein Temperaturlimit unterhalb von 100° C, typischerweise ca. 80° C, angegeben. Dieses Temperaturlimit darf im Betrieb nicht überschritten werden, etwa um die dauerhafte Betriebsfestigkeit der Batterieanordnung abzusichern.

Zur Sicherung gegen versehentliche Berührung der Stromschienen während der Montage oder einer Wartung, sowie um die Stromschienen mit Ausnahme der zur Kontaktierung vorgesehenen Kontaktierungsbereiche der Stromschienen gegen die Umgebung abzuschirmen, können die Stromschienen in einem halbschaligen oder beidseitigen Stromschienengehäuse aufgenommen sein.

Um die durch den Stromfluss in der Stromschiene entstehende Wärme effizient abzuführen, ist es bekannt, sogenannte Gap-Pads, beispielsweise in Form kleiner EPDM-Matten oder aus Silikon, und/oder sogenannte Gap-Filler, beispielsweise in Form einer gelartigen Paste, die zumindest teilweise aushärten kann, vorzusehen, die partiell als thermische Brücke zwischen den Stromschienen und dem Gehäuse dienen. Um den Kontakt beziehungsweise eine flächige Anbindung zwischen den Stromschienen, dem Gap-Filler beziehungsweise Gap-Pad und dem Gehäuse sicherzustellen, werden des Weiteren Niederhalter, typischerweise Kunststoffniederhalter, eingesetzt.

### Darstellung der Erfindung

Ausgehend von dem bekannten Stand der Technik ist es eine Aufgabe der vorliegenden Erfindung, eine verbesserte Stromschienenanordnung zum Einbau in eine Fahrzeugbatterie für ein Elektrofahrzeug, sowie eine verbesserte Fahrzeugbatterie für ein Elektrofahrzeug bereitzustellen.

Die Aufgabe wird durch eine Stromschienenanordnung zum Einbau in eine Fahrzeugbatterie für ein Elektrofahrzeug mit den Merkmalen des Anspruchs 1 gelöst. Vorteilhafte Weiterbildungen ergeben sich aus den Unteransprüchen, der Beschreibung und den Figuren.

Entsprechend wird eine Stromschienenanordnung für eine Fahrzeugbatterie eines Elektrofahrzeugs vorgeschlagen, umfassend mindestens zwei nebeneinander angeordneten Stromschienen zum elektrischen Kontaktieren zumindest einer elektrischen Komponente der Fahrzeugbatterie, wobei die Stromschienen von einem Kunststoffkörper, umgeben sind. Der Kunststoffkörper kann ein Schaumkörper sein. Erfindungsgemäß ist im Kunststoffkörper zumindest ein Befestigungseinsatz zur Befestigung des Kunststoffkörpers an einer Struktur der Fahrzeugbatterie eingebettet.

Durch das Einbetten eines Befestigungseinsatzes, kann die Steifigkeit der Stromschienenanordnung durch direkte Montage an Strukturen der Fahrzeugbatterie weiter erhöht werden. Entsprechend trägt insbesondere das Vorsehen von Befestigungspunkten dazu bei, die Vibrationsneigung der Stromschienen weiter zu verringern.

Zudem kann die Linienarbeitszeit dadurch weiter reduziert werden. Denn durch das Einbetten von Befestigungseinsätzen im Kunststoffkörper kann ein ansonsten erforderliches Einlegen, Positionieren und Befestigen von weiteren Bauteilen anstelle der Einsätze von Hand verzichtet werden.

Der Befestigungseinsatz kann als Insertteil im Kunststoffkörper aufgenommen sein. Auf diese Weise kann ein strukturell mit dem Kunststoffkörper verbundener Befestigungseinsatz bereitgestellt werden, der auf einfache Weise fest mit dem Kunststoffkörper verbunden ist.

Im Kunststoffkörper kann auch zumindest ein Temperaturleiteinsatz zum Ableiten von Wärme aus dem Kunststoffkörper eingebettet sein. So kann Wärme, die beim Betreiben der Batterie und beim Betreiben der Stromschienen mit einem hohen Stromfluss entsteht, aus dem Kunststoffkörper abgeführt werden und kann so für eine reduzierte Temperatur der Stromschienen sorgen. Damit können die vorgegebenen Spezifikationen eingehalten werden oder die Stromschienen können mit einem reduzierten Querschnitt bereitgestellt werden.

Der Temperaturleiteinsatz kann als Insertteil ausgebildet sein und beispielsweise in Form eines als Metallblech ausgebildeten Insertteil bereitgestellt werden. Damit kann auf einfache Weise eine wärmeleitfähige Verbindung zwischen dem Kunststoffkörper und dem Temperatureinsatz bereitgestellt werden.

Der Kunststoffkörper kann sich im Wesentlichen über die gesamte Länge der Stromschienen erstrecken. Dadurch kann im Vergleich zu herkömmlichen Fahrzeugbatterien, bei welchen die Stromschienen lose beziehungsweise nur punktuell gehalten werden, das Entstehen von Vibrationen in den Stromschienen wesentlich reduziert oder gar gänzlich vermieden werden. Denn das Schaummaterial des Kunststoffkörpers wirkt dämpfend und stabilisierend.

Im Gegensatz zu einer Leistungselektronik-Schaltung, bei welcher die darin verbauten Sammelleiter lediglich eine kurze Längserstreckung aufweisen, beispielsweise einige Zentimeter oder Dezimeter, erstrecken sich bei Elektrofahrzeug-Fahrzeugbatterien die Stromschienen oftmals über einen großen Teil der Länge des Elektrofahrzeuges, beispielsweise mit Längen im Meterbereich. Entsprechend neigen die bei herkömmlichen Ausführungen oftmals nur punktuell befestigten Stromschienen während des Betriebes des Elektrofahrzeuges zum Schwingen. Diese Vibrationen sind unerwünscht, einerseits, da sie Lärm erzeugen können, und andererseits die Stromschienen oder andere Komponenten der Fahrzeugbatterie beschädigen könnten. Durch das Ausbilden des Kunststoffkörpers im Wesentlichen über die gesamte Länge der Stromschienen können die Stromschienen signifikant stabilisiert werden, ohne dass die Teilezahl der Fahrzeugbatterie erhöht werden müsste und zusätzliche Fertigungsschritte erforderlich wären.

Zudem kann durch das im Wesentlichen vollständige Umgeben der Stromschienen durch den Kunststoffkörper, also ein im Wesentlichen vollständiges Einbetten der Stromschienen in dem Kunststoffkörper, ein vergleichsweise großer Wärmebetrag aus den Stromschienen an den Kunststoffkörper übertragen werden. Entsprechend stellt die Stromschienenanordnung eine hohe thermische Leitfähigkeit von den Stromschienen in den Kunststoffkörper und davon in weitere Komponenten der Stromschienenanordnung und der Fahrzeugbatterie bereit.

Folglich kann der Querschnitt der Stromschienen aufgrund der hohen Wärmeabfuhr vergleichsweise klein ausgebildet sein, insbesondere, wenn die Ummantelung der Stromschienen durch den Kunststoffkörper im Wesentlichen über den gesamten Umfang des Querschnitts der Stromschienen vorliegt. So kann bei der Ausgestaltung der Stromschienen in Vergleich zu herkömmlichen Ausführungen bezüglich der Stromschienen Material eingespart werden.

Aufgrund der guten elektrischen Isolationswirkung des Kunststoffkörpers kann bei geeigneter Ausführung des Kunststoffkörpers, insbesondere, wenn die Ummantelung der Stromschienen durch den Kunststoffkörper im Wesentlichen über den gesamten Umfang des Querschnitts der Stromschienen vorliegt und die Stromschienen in Wesentlichen über ihre gesamte Länge - etwaige mit Ausnahme etwa der Kontaktbereiche - vom Kunststoffkörper umgeben sind, eine weitere Reduktion des Bauraumes durch Reduktion der Mindestabstände benachbarter Stromschienen erzielt werden, ohne dass eine Gefahr der Lichtbogenbildung erhöht wird oder gar überhaupt besteht.

Ferner kann die Stromschienenanordnung und eine diese umfassende Fahrzeugbatterie im Vergleich zu herkömmlichen Ausführungen mit weniger Bauteilen ausgebildet sein. Unter anderem kann aufgrund des Vorsehens des Kunststoffkörpers auf ansonsten erforderliche Gap-Pads, Gap-Filler, und Niederhalter inklusive der hierzu erforderlichen Befestigungsschrauben verzichtet werden.

Die Reduzierung der Teilezahl und mithin der erforderlichen Fertigungsschritte zur Herstellung der Stromschienenanordnung beziehungsweise der Fahrzeugbatterie resultiert ferner in einer Reduzierung der Linientaktzeit bei der Herstellung einer Fahrzeugbatterie.

Ferner kann aufgrund der Ummantelung der Stromschienen durch den Kunststoffkörper eine ansonsten erforderliche Berührschutzummantelung um die Stromschienen entfallen.

Der Kunststoffkörper kann ein Schaumkörper aus einem Kunststoffmaterial sein. Dadurch lässt sich das Umgeben beziehungsweise Einformen der Stromschienen durch den Schaumkörper effizient erzielen. Denn die Stromschienen können während des Schäumungsprozesses umschäumt werden, so dass ein Verbundkörper aus dem Schaumkörper und den von diesem umschäumten Stromschienen ausgebildet wird.

Durch die im Wesentlichen vollständige Umschäumung der Stromschienen durch den Schaukörper kann ein vergleichsweise großer Wärmebetrag aus den Stromschienen an den Kunststoffkörper übertragen werden. Entsprechend stellt die Stromschienenanordnung eine hohe thermische Leitfähigkeit von den Stromschienen in den Schaumkörper und davon in weitere Komponenten der Stromschienenanordnung und der Fahrzeugbatterie bereit.

Der Kunststoffkörper kann zumindest ein Additiv beziehungsweise zumindest einen Füllstoff aufweisen, insbesondere einen Verstärkungsstoff zum Verbessern der mechanischen Eigenschaften, beispielsweise Kohlepartikel, Kohlefasern, Glaspartikel, Glasfasern, und/oder Basaltpartikel und/oder Basaltfasern. Alternativ oder zusätzlich kann der Kunststoffkörper auch ein Additiv beziehungsweise Füllstoff in Form eines Temperaturleiters umfassen, welcher eine höhere thermische Leitfähigkeit aufweist als der Grundstoff des Kunststoffmaterials, in welchem das oder die Additive eingebettet sind, beispielsweise Metallpartikel, Metallfasern (oder Metallspäne), Kohlepartikel oder Kohlefasern, insbesondere hochwärmeleitende Kohlefasern.

Das Additiv kann eine Verbesserung der mechanischen Eigenschaften des Kunststoffkörpers, etwa eine Erhöhung des E-Moduls und/oder eine Erhöhung der Dämpfungseigenschaften, und eine Erhöhung der thermischen Leitfähigkeit des Kunststoffkörpers gegenüber einem rein aus dem Grundstoff beziehungsweise Matrixmaterial des Kunststoffkörpers ausgebildeten Kunststoffkörper bereitstellen.

Die Stromschienen können in Form von Metallblechbahnen, bevorzugt Kupferblechbahnen und/oder Aluminiumblechbahnen, ausgebildet sein.

Der Kunststoffkörper kann ein Elastomer, ein thermoplastisches Elastomer und/oder einen thermoplastischen Kunststoff umfassen.

Der Kunststoffkörper, beispielsweise der Schaumkörper, kann einen Kunststoffschaum, bevorzugt Polyurethanschaum, umfassen oder daraus bestehen.

Der Kunststoffkörper kann ein elastischer Kunststoffkörper sein.

Der Kunststoffkörper, der beispielsweise als Schaumkörper ausgebildet ist, kann eine Härte von Shore-A von 60 - 100, insbesondere eine Härte von Shore-A von 80-90 aufweisen. Auf diese Weise kann der Kunststoffkörper elastisch ausgebildet sein und so auch eine Vibrationsdämmung bereitstellen. Beispielsweise kann der Kunststoffkörper zwischen einem Batteriemodul und dem Deckel eines Batteriegehäuses angeordnet werden und auf diese Weise zur Vibrationsdämpfung des Deckels des Batteriegehäuses beitragen.

Der Kunststoffkörper kann eine Dichte von 0,5 bis 1,5 kg/dm³, insbesondere von 0,8 bis 1,2 kg/dm³ aufweisen, insbesondere, wenn er als Schaumkörper ausgebildet ist.

Der Kunststoffkörper kann an zumindest ein Gehäuseteil eines Gehäuses zum Aufnehmen der Stromschienen, bevorzugt eine Unterschale und/oder eine Oberschale, angeformt, bevorzugt angespritzt und/oder angeschäumt, sein.

Der Kunststoffkörper kann auch zumindest eine Stromschiene in Umfangsrichtung von deren Querschnitt orthogonal zu ihrer Längserstreckung zumindest an drei Seiten, insbesondere komplett, umgeben.

Das in diesem Dokument beschriebene "Umgeben" der Stromschienen mit dem Kunststoffmaterial kann ein haftendes Umgeben sein, bei welchem das Kunststoffmaterial an einer Außenfläche zumindest einer Stromschiene dauerhaft haftet.

Der Begriff "angeformt" bzw. "Anformen" ist hier definiert als während eines fließfähigen Zustands während eines Ausformens, etwa eines Spritzgießens oder Gießens, des Kunststoffkörpers entstehendes Haften des adhäsiven und/oder reaktiven Kunststoffmaterials an der Oberfläche eines Haftpartners, beispielsweise an der Oberfläche der Stromschienen und/oder einer Oberfläche eines Gehäuseteiles.

Der Begriff *"Anschäumen"* bzw. *"angeschäumt"* ist hier definiert als ein während eines Schäumungsprozesses eines Kunststoffschaumes entstehendes Haften des reaktiven Schaummaterials an der Oberfläche eines Haftpartners. Hier wird entsprechend bei einem Schäumungsprozess zur Ausbildung des Kunststoffkörpers in Form eines Schaumkörpers aufgrund der während des Aufschäumens adhäsiven Wirkung des reaktiven Schaumes der Schaum mit der Innenwand dauerhaft haftend verbunden, und zwar ohne, dass ein Klebeschritt mit einem zusätzlichen Klebstoff erfolgt. Es liegt also keine zusätzliche Klebstoffschicht zwischen dem Schaummaterial des Schaumkörpers und der Innenwand. Vielmehr haftet der Schaumkörper direkt an der Innenwand. "Anschäumen" stellt, wie "Anspritzen" bzw. "Umspritzen", mithin eine Ausgestaltung des "Anformens" dar.

Die von dem Kunststoffmaterial umgebene, angeformte Fläche des Fügepartners des Kunststoffkörpers, beispielsweise des Schaumkörpers, insbesondere eine Fläche einer Stromschiene und/oder eine Fläche eines Gehäuseteils, kann zuvor einer Vorbehandlung, etwa einer Reinigung oder einem Aufrauen, unterzogen worden sein. Es kann ein Haftvermittler beziehungsweise eine haftvermittelnde Schicht, insbesondere ein Primer, aufgetragen sein.

Die vorstehend genannte Aufgabe wird ferner durch eine Fahrzeugbatterie für ein Elektrofahrzeug mit den Merkmalen des Anspruchs 12 gelöst. Vorteilhafte Weiterbildungen ergeben sich aus der vorliegenden Beschreibung und den Figuren.

Entsprechend wird eine Fahrzeugbatterie für ein Elektrofahrzeug vorgeschlagen, umfassend eine Mehrzahl von miteinander zu verschaltenden Batterieeinheiten, insbesondere eine Mehrzahl von je eine Vielzahl von Batteriezellen umfassenden Batteriemodulen, und eine Stromschienenanordnung gemäß einer der vorstehenden Ausführungsformen. Die Batterieeinheiten sind beispielsweise durch die Stromschienen der Stromschienenanordnung elektrisch kontaktiert.

Durch die Fahrzeugbatterie werden die hinsichtlich der Stromschienenanordnung beschriebenen Vorteile und Wirkungen in analoger Weise erzielt.

Unter einer *"Fahrzeugbatterie für ein Elektrofahrzeug"* wird vorliegend die Primärantriebsbatterie des Elektrofahrzeuges verstanden, also jene Batterie, welche die (Hochvolt-)Leistung für den als Traktions-Primärantrieb ausgebildeten Elektromotor des Elektrofahrzeuges liefert.

### Kurze Beschreibung der Figuren

Bevorzugte weitere Ausführungsformen der Erfindung werden durch die nachfolgende Beschreibung der Figuren näher erläutert. Dabei zeigen:
- Figur 1: schematisch eine Schnittansicht durch die Stromschienenanordnung in einer Fahrzeugbatterie orthogonal zur einer Längserstreckung der Stromschienenanordnung;
- Figur 2: schematisch eine perspektivische Schnittansicht durch die Stromschienenanordnung aus Figur 1; und
- Figur 3: schematisch eine Schnittansicht durch eine weitere Stromschienenanordnung orthogonal zur einer Längserstreckung der Stromschienenanordnung.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

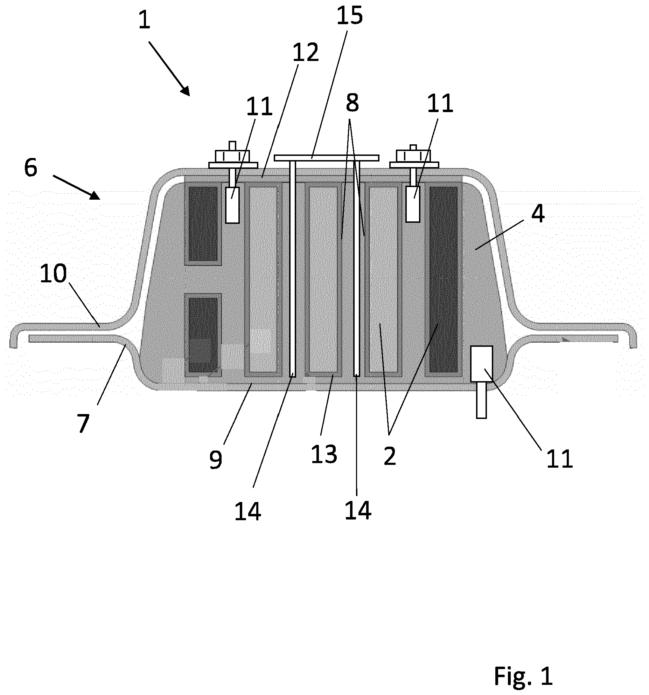

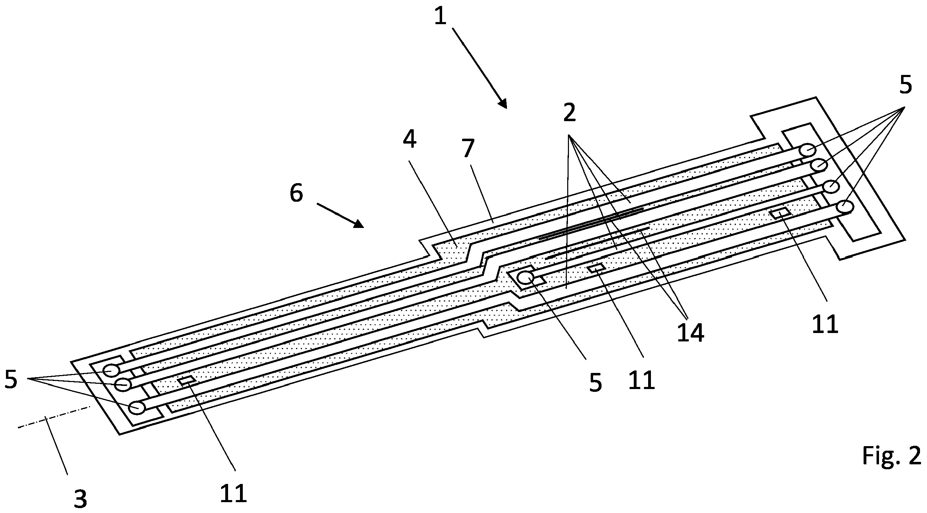

Figur 2 zeigt schematisch eine perspektivische Schnittansicht durch einen Teilbereich einer Stromschienenanordnung 1 in einer Fahrzeugbatterie. Aus Figur 1 ist schematisch eine Schnittansicht durch die Stromschienenanordnung 1 orthogonal zur einer Längserstreckung 3 der Stromschienenanordnung 1 zu entnehmen. Die Schnittebenen in den Figuren 1 und 2 verlaufen jeweils durch eine Mehrzahl von nebeneinander angeordneten Stromschienen 2. Die Stromschienen 2 sind Metallblechbahnen, vorliegend Kupferblechbahnen, mit deren Längserstreckung 3 als Haupterstreckung. Die Längserstreckung 3 entspricht im Wesentlichen einer Längsrichtung der Fahrzeugbatterie und auch des Elektrofahrzeuges, in welchen die Stromschienenanordnung 1 eingebaut ist.

Die Stromschienen 2 sind im Wesentlichen über ihre gesamte Länge in einem Kunststoffkörper 4, vorliegend in Form eines Schaumkörpers aus aufgeschäumten und ausgehärteten Polyurethan, aufgenommen. Mit anderen Worten sind die Stromschienen 2 im Wesentlichen über ihre gesamte Länge vom Kunststoffkörper 4 umschäumt. Die Kontaktbereiche 5 zum Eingehen einer elektrischen Kontaktierung der Stromschienen 2 sind gemäß dieser Ausführungsform nicht vom Kunststoffkörper 4 umschäumt. In einer alternativen Ausführungsform können auch die Kontaktbereiche 4 zumindest teilweise vom Kunststoffkörper 4 umschäumt sein.

In der vorliegenden Ausführungsform wurden die Stromschienen 2 zunächst in einer vorgegebenen Position relativ zu einer Unterschale 7 eines Gehäuses, genauer eines Stromschienengehäuses 6 angeordnet und anschließend durch Einbringen des den Kunststoffkörper 4 ausbildenden Schäummaterials umschäumt. Der Kunststoffkörper 4 haftet nach dem Verfestigen aufgrund der adhäsiven Eigenschaften des Schäummaterials während des Schäumens dauerhaft an den Außenflächen 8 der Stromschienen 2 und an der Innenseite 9 der Unterschale 7.

Im Kunststoffkörper 4 sind ferner Befestigungseinsätze 11 eingebettet, die zur Montage der Stromschienenanordnung 1 an einem Batteriemodul und/oder an einem Batteriegehäuse vorgesehen sind. Diese Befestigungseinsätze 11 können während des Ausschäumens des Kunststoffkörpers 4 von dem den späteren Kunststoffkörper 4 bildenden Schäummaterial umschäumt werden und auf diese Weise Teil der Stromschienenanordnung 1 werden. Mit anderen Worten kann es sich bei den Befestigungseinsätzen 11 um Insertteile handeln, die während des Prozesses des Umschäumens in dem Kunststoffkörper 4 aufgenommen werden und mit diesem verbunden werden.

Alternativ kann zumindest ein Befestigungseinsatz 11 nachträglich in den Kunststoffkörper 4 eingebracht werden.

Die Befestigungseinsätze 11 sind vorzugsweise, wie in Figur 1 gezeigt, als Befestigungspunkte ausgebildet. Die beiden in Figur 1 oben gezeigten Befestigungseinsätze 11 sind zum Befestigen einer Oberschale 10 des Gehäuses 6 an den Verbund aus Unterschale 7 und Kunststoffkörper 4 mitsamt den darin eingebetteten Stromschienen 2 und Befestigungseinsätzen 11 ausgebildet. Sie können aber auch zur Anbindung an einen Deckel eines Batteriegehäuses ausgebildet sein.

Der unten gezeigte Befestigungseinsatz 11 ist zum Befestigen der Stromschienenanordnung 1 an eine tragende Struktur der Fahrzeugbatterie und/oder eines Batteriemoduls vorgesehen.

Vorliegend ist die Oberschale 10 an den Kunststoffkörper 4 angeschraubt. Zur verbesserten Wärmeübertragung kann zwischen Oberschale 10 und Kunststoffkörper 4 ein Gap-Pad 12 angeordnet sein.

Alternativ kann der Kunststoffkörper 4 auch an die Oberschale 10 angeschäumt sein, beispielsweise anstelle an der Unterschale 7 angeschäumt zu sein. Oder er ist sowohl an die Unterschale 7 als auch an die Oberschale 10 angeschäumt.

Durch die im Wesentlichen vollständige Umschäumung der Stromschienen 2 durch den Schaukörper 4 kann ein vergleichsweise großer Wärmebetrag aus den Stromschienen 2 an den Kunststoffkörper 4 übertragen werden. Entsprechend stellt die Stromschienenanordnung 1 eine hohe thermische Leitfähigkeit von den Stromschienen 2 in den Kunststoffkörper 4 und weiter ins Gehäuse 6 bereit.

Folglich kann der Querschnitt der Stromschienen 2 aufgrund der hohen Wärmeabfuhr vergleichsweise klein ausgebildet sein, insbesondere, wenn die Ummantelung der Stromschienen 2 durch den Kunststoffkörper 4 im Wesentlichen über den gesamten Umfang des Querschnitts der Stromschienen 2 vorliegt.

Zur Verbesserung der Wärmeabfuhr aus dem Kunststoffkörper 4 können weiterhin Temperaturleiteinsätze 14 in dem Kunststoffkörper 4 aufgenommen sein. Beispielsweise kann ein Temperaturleiteinsatz 14 in Form eines Aluminiumblechs vorliegen, das eine gute Wärmeableitung ermöglicht. Der Temperaturleiteinsatz 14 kann entsprechend ebenfalls in Form eines Insertteils in den Kunststoffkörper 4 aufgenommen werden.

In dem in den Figuren 1 und 2 gezeigten Ausführungsbeispiel sind zwei Temperaturleiteinsätze 14 miteinander über eine Anbindung 15 miteinander verbunden, die den Wärmeübertrag an ein Gehäuseteil des Batteriegehäuses oder an einen Kühlkörper verbessern kann.

Der Kunststoffkörper 4 kann zumindest ein Additiv beziehungsweise zumindest einen Füllstoff aufweisen, insbesondere einen Verstärkungsstoff zum Verbessern der mechanischen Eigenschaften, beispielsweise Kohlepartikel, Kohlefasern, Glaspartikel, Glasfasern, und/oder Basaltpartikel und/oder Basaltfasern. Alternativ oder zusätzlich kann der Kunststoffkörper auch ein Additiv beziehungsweise Füllstoff in Form eines Temperaturleiters umfassen, welcher eine höhere thermische Leitfähigkeit aufweist als der Grundstoff des Kunststoffmaterials, in welchem das oder die Additive eingebettet sind, beispielsweise Metallpartikel, Metallfasern (oder Metallspäne), Kohlepartikel oder Kohlefasern, insbesondere hochwärmeleitende Kohlefasern.

Das Additiv kann eine Verbesserung der mechanischen Eigenschaften des Kunststoffkörpers 4, etwa eine Erhöhung des E-Moduls und/oder eine Erhöhung der Dämpfungseigenschaften, und eine Erhöhung der thermischen Leitfähigkeit des Kunststoffkörpers 4 gegenüber einem rein aus dem Grundstoff beziehungsweise Matrixmaterial des Kunststoffkörpers 4 ausgebildeten Kunststoffkörper bereitstellen.

Aufgrund der guten elektrischen Isolationswirkung des Kunststoffkörpers kann bei geeigneter Ausführung des Kunststoffkörpers, insbesondere, wenn die Ummantelung der Stromschienen 2 durch den Kunststoffkörper 4 im Wesentlichen über den gesamten Umfang des Querschnitts der Stromschienen 2 vorliegt und die Stromschienen 2 in Wesentlichen über ihre gesamte Länge - etwaige mit Ausnahme etwa der Kontaktbereiche - vom Kunststoffkörper 4 umgeben sind, eine weitere Reduktion des Bauraumes durch Reduktion der Mindestabstände benachbarter Stromschienen 2 erzielt werden, ohne dass eine Gefahr der Lichtbogenbildung erhöht wird oder gar überhaupt besteht.

Ferner kann im Vergleich zu herkömmlichen Fahrzeugbatterien, bei welchen die Stromschienen 2 lose beziehungsweise nur punktuell gehalten werden, das Entstehen von Vibrationen in den Stromschienen 2 wesentlich reduziert oder gar gänzlich vermieden werden. Denn der Kunststoffschaum des Kunststoffkörpers 4 wirkt dämpfend und stabilisierend.

Dabei kann der ausgehärtete Kunststoffschaum des Kunststoffkörpers 4 beispielsweise eine Härte von Shore-A von 60-100, insbesondere von Shore-A 80-90 aufweisen und stellt so eine elastische Halterung für die Stromschienen und die über die Befestigungseinsätze 11 angebundenen Bestandteile der Batterie bereit.

Die Stromschienenanordnung 1 kann so beispielsweise auch als Verstrebung und gleichzeitige Vibrationsdämpfung für einen Deckel eines Batteriegehäuses vorgesehen sein. Beispielsweise kann die Stromschienenanordnung 1 dazu zwischen Batteriemodulen und dem Deckel des Batteriegehäuses angeordnet sein und den Deckel auf diese Weise unterstützen.

Ferner kann die Stromschienenanordnung 1 und eine diese umfassende Fahrzeugbatterie im Vergleich zu herkömmlichen Ausführungen mit weniger Bauteilen ausgebildet sein. Unter anderem kann aufgrund des Vorsehens des Kunststoffkörpers 4 auf ansonsten erforderliche Gap-Pads, Gap-Filler, und Niederhalter inklusive der hierzu erforderlichen Befestigungsschrauben verzichtet werden.

Die Reduzierung der Teilezahl und mithin der erforderlichen Fertigungsschritte zur Herstellung der Stromschienenanordnung 1 beziehungsweise der Fahrzeugbatterie resultiert ferner in einer Reduzierung der Linientaktzeit bei der Herstellung einer Fahrzeugbatterie.

Ferner kann aufgrund der Ummantelung der Stromschienen 2 eine ansonsten erforderliche Berührschutzummantelung 13 um die Stromschienen entfallen.

Das Ausschäumen des Kunststoffkörpers 4 kann in einem hier nicht gezeigten Schäumwerkzeug erfolgen, in welches entsprechend vor dem Schließen des Schäumwerkzeugs die Unterschale 7 und/oder die Oberschale 10, die Stromschienen und die Einsätze 11 eingelegt wurden. Nach dem Schließen kann das Einbringen des Schäummaterials erfolgen.

Alternativ kann das Ausschäumen auch nach dem Einsetzen der Stromschienen 2 in die Fahrzeugbatterie erfolgen, vorzugsweise nachdem das Gehäuse 6 ebenfalls bereits eingesetzt ist.

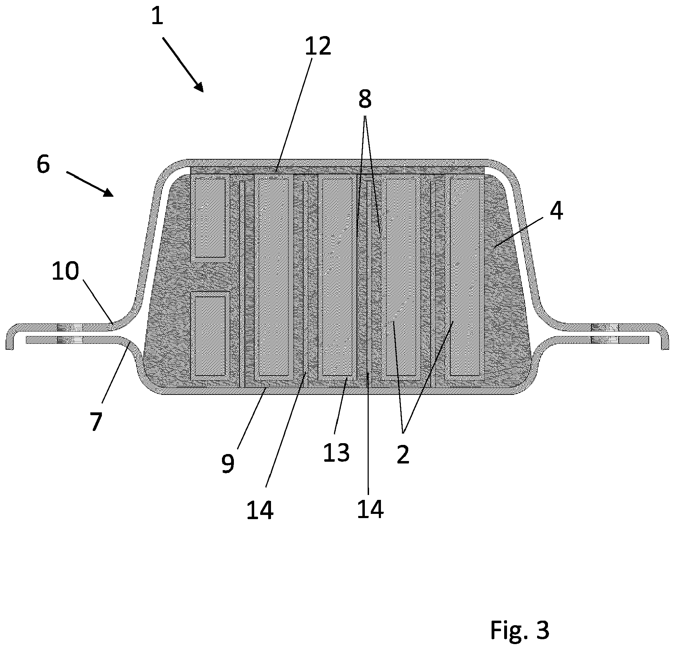

Figur 3 zeigt schematisch eine Schnittansicht durch eine weitere Stromschienenanordnung 1 orthogonal zur einer Längserstreckung 3 (siehe Figur 2) der Stromschienenanordnung 1. Die Stromschienenanordnung 1 entspricht im Wesentlichen jener aus Figur 1, wobei hier die Temperaturleiteinsätze 14 im Inneren des Gehäuses 6 vorgesehen sind. Anstelle der zusätzlichen Anbindung 15 aus Figur 1 wirkt hier das Gehäuse 6, vorliegend die Unterschale 7, als Brücke zwischen den als Kühlrippen ausgebildeten Temperatureinsätzen 14, sowie als Temperaturbrücke zur Ableitung von Wärme aus den Stromschienen 2 über den Kunststoffkörper 4 in die Temperatureinsätze 14 und weiter in das Gehäuse 2 und an die Umgebung außerhalb des Gehäuses 4 und/oder an Komponenten der Stromschienenanordnung 1 und/oder einer die Stromschienenanordnung 1 umfassenden Fahrzeugbatterie, die zur Abführung der Wärme vom Gehäuse 6 vorgesehen sind.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen.

### Bezugszeichenliste

- 1: Stromschienenanordnung
- 2: Stromschiene
- 3: Längserstreckung
- 4: Kunststoffkörper
- 5: Kontaktbereich
- 6: Gehäuse
- 7: Unterschale
- 8: Außenfläche
- 9: Innenwand
- 10: Oberschale
- 11: Befestigungseinsatz
- 12: Gap-Pad
- 13: Berührschutzummantelung
- 14: Temperaturleiteinsatz
- 15: Anbindung Temperaturleiteinsatz

## Patentansprüche

1. Stromschienenanordnung (1) für eine Fahrzeugbatterie eines Elektrofahrzeugs, umfassend mindestens zwei nebeneinander angeordnete Stromschienen (2) zum elektrischen Kontaktieren zumindest einer elektrischen Komponente der Fahrzeugbatterie, wobei die Stromschienen (2) von einem Kunststoffkörper (4) umgeben sind,
**dadurch gekennzeichnet, dass**
im Kunststoffkörper (4) zumindest ein Befestigungseinsatz (11) zur Befestigung des Kunststoffkörpers (4) an einer Struktur der Fahrzeugbatterie eingebettet ist.

2. Stromschienenanordnung (1) gemäß Anspruch 1, **dadurch gekennzeichnet, dass** der Kunststoffkörper (4) ein Schaumkörper ist.

3. Stromschienenanordnung (1) gemäß Anspruch 1 oder 2, **dadurch gekennzeichnet, dass** der Befestigungseinsatz (11) als Insertteil im Kunststoffkörper (4) aufgenommen ist.

4. Stromschienenanordnung (1) gemäß einem der vorstehenden Ansprüche, **dadurch gekennzeichnet, dass** im Kunststoffkörper (4) zumindest ein Temperaturleiteinsatz (14) zum Ableiten von Wärme aus dem Kunststoffkörper (4) eingebettet ist.

5. Stromschienenanordnung (4) gemäß Anspruch 4, **dadurch gekennzeichnet, dass** der Temperaturleiteinsatz (14) als Inserteil ausgebildet ist, insbesondere als ein als Metallblech ausgebildetes Insertteil.

6. Stromschienenanordnung (4) gemäß einem der vorstehenden Ansprüche, **dadurch gekennzeichnet, dass** sich der Kunststoffkörper (4) im Wesentlichen über die gesamte Länge der Stromschienen (2) erstreckt.

7. Stromschienenanordnung (4) gemäß einem der vorstehenden Ansprüche, **dadurch gekennzeichnet, dass** die Stromschienen (2) in Form von Metallblechbahnen, bevorzugt Kupferblechbahnen und/oder Aluminiumblechbahnen, ausgebildet sind.

8. Stromschienenanordnung (1) gemäß einem der vorstehenden Ansprüche, **dadurch gekennzeichnet, dass** der Kunststoffkörper (4) einen Kunststoffschaum, bevorzugt Polyurethanschaum, umfasst.

9. Stromschienenanordnung (1) gemäß einem der vorstehenden Ansprüche, **dadurch gekennzeichnet, dass** der Kunststoffkörper (4) eine Härte von Shore-A von 60 - 100, insbesondere eine Härte von Shore-A von 80 - 90 aufweist, und/oder der Kunststoffkörper (4) eine Dichte von 0,5 - 1,5 kg/dm³, insbesondere von 0,8 - 1,2 kg/dm³ aufweist.

10. Stromschienenanordnung (1) gemäß einem der vorstehenden Ansprüche, **dadurch gekennzeichnet, dass** der Kunststoffkörper (4) an zumindest ein Gehäuseteil eines Gehäuses (6) zum Aufnehmen der Stromschienen (2), insbesondere an eine Unterschale (7) und/oder an eine Oberschale (10), angeformt, bevorzugt angeschäumt, ist.

11. Stromschienenanordnung (1) gemäß einem der vorstehenden Ansprüche, **dadurch gekennzeichnet, dass** der Kunststoffkörper (4) zumindest eine Stromschiene (2) in Umfangsrichtung deren Querschnitts orthogonal zu ihrer Längserstreckung (3) zumindest an drei Seiten, bevorzugt komplett umgibt.

12. Fahrzeugbatterie für ein Elektrofahrzeug, umfassend eine Mehrzahl von miteinander zu verschaltenden Batterieeinheiten, insbesondere eine Mehrzahl von je eine Vielzahl von Batteriezellen umfassenden Batteriemodulen, **gekennzeichnet durch** eine Stromschienenanordnung (1) gemäß einem der vorstehenden Ansprüche.
